Europäisches Patentamt

European Patent Office

Office européen des brevets

(11) Publication number: **0 279 801**
**A2**

# (12) EUROPEAN PATENT APPLICATION

(21) Application number: 88850052.7

(22) Date of filing: 12.02.88

(51) Int. Cl.⁴: **B 23 Q 13/00**

(30) Priority: 17.02.87 SE 8700631

(43) Date of publication of application:
24.08.88 Bulletin 88/34

(84) Designated Contracting States:
DE ES FR GB NL SE

(71) Applicant: SANDVIK AKTIEBOLAG
S-811 81 Sandviken 1 (SE)

(72) Inventor: Englund, Tord
Postlada 4045
S-828 00 Edsbyn (SE)

(74) Representative: Taquist, Lennart et al
Sandvik AB Patents & Licences Fack
S-811 81 Sandviken 1 (SE)

(54) Holder for tools.

(57) The invention concerns a holder for elongated edged tools, where the holder comprises a base plate (1), side ribs (2) and a barbed locking bridge (10). Recessed into the base plate (1) is a removable sealing member (17, 18) which keeps the locking bridge (10) extended in order that barb-shaped grooves (15) on the locking bridge intermesh with grooves on the side ribs (2) of the holder so that the holder can not be removed from the tool while the sealing member is in place.

EP 0 279 801 A2

## Description

Holder for tools

Tools with sharp edges, such as chisels, files and knives, are easily damaged if they are not packaged during transport from the manufacturer to the retail trader in such a manner that the edges are efficiently protected. At the same time there is a strong requirement that the customer shall be able to see and if possible touch the edges to form an opinion of the usefulness and quality of the tools.

The present invention concerns a holder for such elongated tools, that in one end present an edge portion and in the other end a handle portion, and it comprises a base plate with peripheral walls and a barbed locking bridge.

Earlier packaging often consisted of a cardboard tray attached to the tool with metal wire or adhesive tape, or of a plastic frame with resilient tongues. Both designs have certain disadvantages. Trays with wire or adhesive tape require an additional operation with a special machine for attachment. Frames with resilient tongues would permit that visitors in the store extract the tool and carelessly damage it.

A holder according to the present invention comprises a plastic frame which is easily attached to the tool without special machines, and where the frame can not be removed without becoming intentionally and visibly altered, but where it even after this can be used by the customer for display or storage.

A holder according to the invention is mainly characterized in that it provides removable sealing means in the plane of the base plate, designed to keep the locking bridge extended and prevent its compression, thereby keeping barbs or serrations on the locking bridge in safe registration and preventing unintentional displacement of the locking bridge.

Other characterizing details of the invention are more closely described in the following with reference to the accompanying drawings, which show a preferred embodiment of the invention.

Fig. 1 shows a plane view of a holder for edge tools according to the invention.

Fig. 2 shows a section along the line II-II of Fig. 1.

Fig. 3 shows a section along the line III-III of Fig. 1.

Fig. 4 shows a slightly enlarged section along the line III-III of Fig. 1 with the locking bridge in partly depressed position and in fully depressed position when locking is completed.

The holder includes a base plate (1) which is provided with stiffening ribs (2) oriented vertically to the base plate (1) around the major part of the perimeter. Between the ribs (2) on opposite long sides two flexible bridges (3 and 4) are extended near the center of the holder, mutually displaced vertically and longitudinally. The spacing between the bridges (3 and 4) vertically to the base plate (1) is made slightly less than the thickness of the edge portion of the tool, in order that the bridges (3 and 4) resiliently locate the tool when this is parallel to the holder frame, with the tool held a small distance from the base plate (1). In this way the edge is easier for the customer to feel, the tool is protected from moisture condensation and is suspended in a shock-resistant way. At one end of the holder there is a flat tab (5) with space for a product information printed on the tab or on an adhesive label, and a hole (6) for suspending the holder and the tool on a peg. At the other end of the holder the rib (2) is provided with a cutout (7), preferably made as a V-shaped notch to locate a narrower section of the stem or tangue of the tool above the centerline (9) of the plate (1).

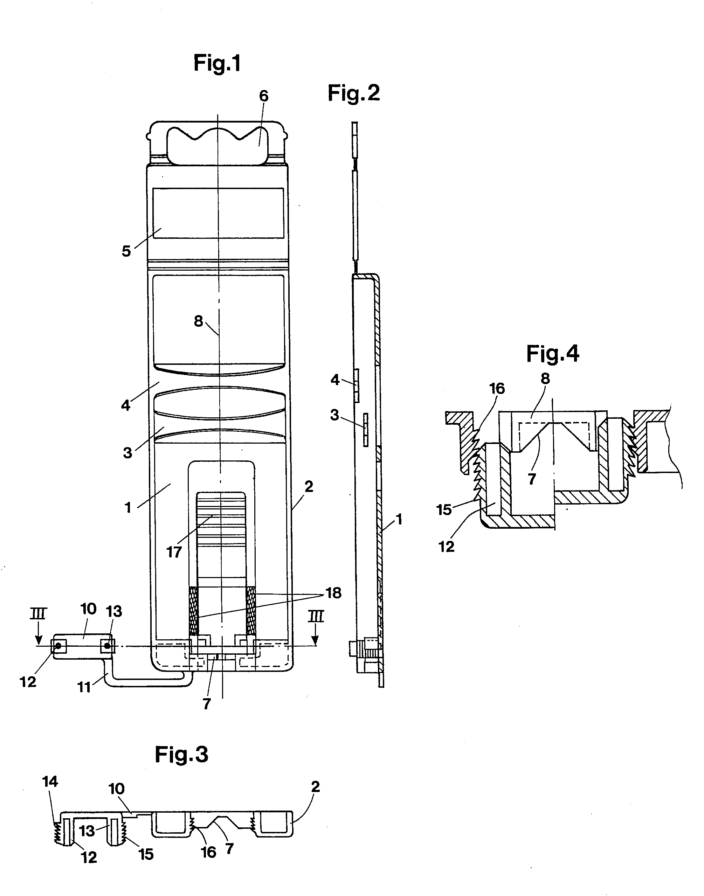

A locking bridge (10) is made contiguous with the rest of the holder frame, and is connected to this through a thin flexible link (11). The locking bridge (10) has two posts (12 and 13) which on their outer sides have barb-shaped grooves (14 and 15) as shown in Figure 3. Adjoining the cutout (7) the ribs (2) are displaced inwards to a distance corresponding to the outside width of the locking bridge (10) and provided with barb-shaped grooves (16).

The tool can be secured to the holder frame by inserting its edge portion between the bridges (3 and 4) and placing the narrow stem section against the cutout (7), after which the locking bridge (10) is reversed and pressed down across the narrow stem section to make the barb-shaped grooves (15 and 16) intermesh to prevent the locking bridge (10) from inadvertently falling off.

Recessed into the plane of the base plate (1) is a sealing member comprising a tab (17) and closely parallel to the cutout (7) an intermediate support (8), the width of which corresponds to the inside distance between the posts (12 and 13) of the locking bridge (10). The tab (17) is wider than the intermediate support, to prevent sliding of the locking bridge (10) in a longitudinal direction.

The tab (17) is connected to the base plate (1) through thin tearing zones (18) provided with fracture locating grooves. The intermediate support (8) and the tab 17 ensure that the barb-shaped grooves (15 and 16) intermesh to prevent the removal of the holder from the tool as long as the sealing member is intact.

When the tool is to be used the first time, the whole sealing member is torn off, by bending the tab (17) and pulling it out of the plane of the base plate (1) until the tearing zones (18) break. The posts (12 and 13) of the locking bridge (10) will then through their stiffness retain their distance and leave the barb-shaped grooves (15 and 16) intermeshing, and the frame is still attached to the tool. By compressing the locking bridge (10) or by sliding it in the longitudinal direction of the base plate, the intermeshing of the grooves (15 and 16) can be broken, and the locking bridge (10) lifted, so that the frame can be removed from the tool.

The holder can again be attacked to the tool, but the absence of the sealing member will then prove that the holder has previously been removed.

## Claims

1. Holder for such elongated tools, that at one end present an edge portion and at their other end a handle portion, comprising a base plate (1) with lateral ribs (2) and a locking bridge (10) the ends of which form two posts (12, 13) with barb-like grooves (15) on their outer surfaces to intermesh with corresponding grooves (16) or edges on the base plate (1), **characterized** in that it is provided with a removable sealing member (17, 18) recessed into the base plate (1), designed to keep the locking bridge (10) extended and prevent its compression, so that the barbs (15) on the locking bridge (10) are securely intermeshed with the corresponding barbs (16) on the lateral rib (2) of the holder to prevent inadvertent removal of the locking bridge (10).

2. Holder according to claim 1, **characterized** in that the sealing member is formed as a tab (17) connected to the base plate (1) through thin tearing zones (18) and designed to prevent the locking bridge (10) from moving in the plane of the base plate.

3. Holder according to claim 1 or 2, **characterized** in that it contains two crosswise bridges (3, 4), extending from the side ribs (2) perpendicularly to the lengthwise direction of the holder mutually displaced vertically and longitudinally, and the mutual vertical displacement is slightly less than the thickness of the edge portion of the tool to be attached to the holder.

0279801

**Fig.1**

**Fig.2**

**Fig.4**

**Fig.3**